(19) Europäisches Patentamt
European Patent Office
Office européen des brevets

(11) Publication number: **0 153 308 B1**

(12) **EUROPEAN PATENT SPECIFICATION**

(45) Date of publication of patent specification: **02.08.89**

(51) Int. Cl.$^4$: **G 21 C 9/00**

(21) Application number: **83902932.9**

(22) Date of filing: **18.08.83**

(86) International application number: **PCT/US83/01278**

(87) International publication number: **WO 85/00921 28.02.85 Gazette 85/05**

(54) **RETROFITTABLE NUCLEAR REACTOR.**

(43) Date of publication of application: **04.09.85 Bulletin 85/36**

(45) Publication of the grant of the patent: **02.08.89 Bulletin 89/31**

(84) Designated Contracting States: **DE FR GB**

(56) References cited:
DE-A-2 622 050
DE-A-2 931 729
US-A-3 068 654
US-A-3 607 630
US-A-3 935 063
US-A-4 009 579
US-A-4 045 284
US-A-4 146 429
US-A-4 240 875
US-A-4 252 612
US-A-4 310 385

(73) Proprietor: **R & D ASSOCIATES**
**4640 Admiralty Way Post Office Box 9695**
**Marina del Rey CA 90291 (US)**

(72) Inventor: **LATTER, Albert, L.**
**13920 Northwest Passage**
**Marina del Rey, CA 90291 (US)**
Inventor: **HAMMOND, R., Philip**
**1021 Lincoln Boulevard**
**Santa Monica, CA 90403 (US)**
Inventor: **DOOLEY, James, L.**
**344 - 18th Street**
**Santa Monica, CA 90402 (US)**

(74) Representative: **Godsill, John Kenneth et al**
**Haseltine Lake & Co. Hazlitt House 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 153 308 B1

Courier Press, Leamington Spa, England.

## Description

Field of the invention

The present invention relates to structures for the prevention of the escape of radiation into the atmosphere in the unlikely event of a melt-down of the core of a nuclear reactor. The structure has been informally referred to as a "Core Catcher".

Background of the invention

The failure of the regular and emergency cooling systems of a nuclear reactor may result in melting of the fuel as a result of the continuous evolution of heat from the decay of fission products therein. Under some conceivable conditions, the melted fuel could penetrate the primary reactor vessel and fall to the floor of the containment building which encloses it. Most existing nuclear reactor plants are not designed for such a rare eventuality, and the large mass (in the order of 100 tons) of self-heating heavy fuel (uranium oxide and fission products) could attack the floor of the containment structure, generating gas which could rupture the building by exceeding its survival pressure, or it could melt its way through the foundation. Radioactive material would escape to the biosphere with either type of failure.

Certain analyses have indicated that the probability of a core melt-down is relatively low. However, recent failure experience shows that failure analysis is subject to many uncertainties, and indicates the need for a reliable and relatively invulnerable low cost structure for guarding against the disastrous possibilities wvich could result from a melt-down. Further, the presence of such an ultimate fail-safe structure might reduce the clamor from anti-nuclear groups which may otherwise reduce the number of nuclear plants which will be built and/or operated.

Various catchments intended to intercept the melted-down reactor fuel mass and prevent rupture of the containment have been proposed heretofore. Four such arrangements are disclosed in U.S. Patent Nos. 3,607,630, 4,036,688 and 4045284 and DE—A—2931729. Specifically, US—A—4045284 discloses a passive system for the prevention of the escape of radioactive material to the biosphere from a nuclear reactor plant suffering a major core-destructive accident with melt-down of the reactor core, said nuclear reactor plant having a main above-ground structural containment shell, said system comprising: isolation conduit means extending downward from the floor of the nuclear reactor plant immediately below the reactor core, to receive the core material following melt down, said isolation conduit means having a relatively narrow inner cross-sectional transverse area corresponding substantially to that of the reactor core (14) per se; and means associated with said isolation conduit means for delaying the descent of said core material through said isolation conduit means following melt-down. Other references showing prior proposals of others are cited below this specification. None of these appear to be practical solutions to the problem, all having one or more of the following deficiencies:

1. They would only delay, instead of preventing, the progress of the core material to the outside.
2. They would require some kind of unspecified active devices to remove decay heat, such as pumps, motors, and source of power.
3. They would require complete redesign of the reactor, the containment building, or both, because of their requirements of size, shape and position.
4. Their cost may be prohibitive.

A system requiring active devices is clearly unsuitable because it would be unreasonable to assume that the destructive events which have disabled all of the multiple active cooling systems of the reactor have not also damaged the core-catching cooling system or its power supply. A delaying action by itself serves no purpose unless some further system can be brought into play for final retainment. A system which cannot be conveniently retrofitted to existing plants is of little use to an industry which already has on hand over 150 reactors, complete or under construction; and, without greater public confidence, this industry may not ever be able to build any more of these needed power generating reactors.

The object of the present invention is therefore, to provide a core containment system which will:

— survive the most violent events which might destroy the reactor itself,

— adequately and reliably intercept and contain the reactor fuel debris indefinitely,

— insure that the decay heat of the contained fission products is conveyed outside the containment structure, without releasing any radioactive material

— operate as a passive system, requiring no power supplies or human intervention for an extended period,

— be suitable for retrofitting to existing plants, at a cost, including loss-of-service cost, which is reasonable considering the remote chance of its ever being used.

In accordance with the invention, the following features are provided: said isolation conduit means having a vertical extent at least equal to the transverse extent of said isolation conduit means; a core catcher heat exchanger mounted below said isolation conduit means to receive melted core material flowing through said isolation conduit means, said heat exchanger having a sufficiently small cross-section for containing the core material to preclude a "critical" assembly for the particular core material employed in the reactor and said core-catcher heat exchanger being of a size and shape for sufficiently cooling the molten core material to provide a solid liner formed from said molten core material on the inner wall of said core-catcher heat exchanger; and passive means for conducting heat away from said core catcher heat exchanger.

In addition to the foregoing basic elements supplemental features or aspects of the invention may include one or more of the following:

(A) The blast isolation conduit means and the core-catching heat exchanger may be formed as a single long vertically extending channel of relatively small cross-section, to facilitate retrofitting to existing reactors.

(B) Cooling towsr arrangements located near the reactor containment structure may include passively circulated water cooling arrangements coupled to both the core-catcher heat exchanger and also to a heat exchanger structure extending within the above-ground containment shell.

(C) The isolation conduit means and/or the core-catcher heat exchanger may be partially filled with layers of energy absorbing material such as sand, and thin transverse structural supporting sheets, to control the descent of the molten core material.

(D) The isolation conduit means and the core-catcher heat exchanger may be enclosed in a massive reinforced concrete shell which is continuous with the containment structure.

(E) The isolation conduit means may include an inner wall of steel, covering a layer of refractory material, such as carbon.

(F) The core-catcher heat exchanger may include a steel inner liner and an enclosing water jacket to produce a solid or "frozen" layer of the uranium oxide or other core material against the steel walls as the main mass of the molten material is gradually cooled down.

(G) The core-catcher heat exchanger is sufficiently elongated and thin that the contained core material will not assume a chain reacting or "critical" configuration; and in some cases it may include a bifurcated or branching structure to achieve this result.

(H) Concerning specific dimensions, to facilitate retrofitting, it is contemplated that, as compared with the normal diameter of a reactor containment structure of 30 or 40 meters or more (100 feet or more), the diameter of the isolation conduit means and the core-catcher heat exchanger might be in the order of two or three meters (6 or 10 feet), to insure blast or explosion isolation, and to facilitate the digging of a vertical shaft under the reactor structure without seriously undermining it. For fast breeder reactors the core-catcher heat exchanger could narrow down or be bifurcated to a transverse dimension in the order of about thirty centimeters (one foot) to avoid the possibility of a "critical" geometry.

Such features assist in overcoming the shortcomings of the previous art, by giving the following advantageous functions:

1. Collection and guidance of the core debris to the desired location, while preventing attack on the containment building structure and foundations.

2. Control of the maximum temperature and rate of descent of the core debris, while ensuring its final arrival at the desired location.

3. Accommodation to the presence of, or the absence of, large quantities of water which may be present from previous attempts to prevent melting of the core.

4. Control of the shape and position of the core material at its final location in order to insure a suitable geometry for removal of heat, and to insure that a critical mass cannot be formed.

5. Accommodation to the presence of other residues which may accompany the core material, such as molten steel, structural fragments, etc,

6. Provision of a chilled-wall crucible or core-catching heat-exchanger of such a shape, type, and position that the molten core material is forced to provide a container or solid liner for itself, such self-container consisting of a layer of "frozen" or solid fuel material adjacent to the chilled surface and having sufficient surface area and suitable thickness as to transfer continuously the amount of the decay heat produced in the core material to the chilled wall of the crucible or heat-exchanger.

7. Passive, self-operating arrangements for collecting and conveying heat which is produced by the core material within the building, and of conveying such heat to a suitable point for atmospheric discharge. This can be accomplished by passive circulation of water or air, or by a massive heat conduction system.

8. Protective shielding for insuring that the final chilled-wall crucible and its heat removal system, and the heat removal system for water or steam within the building are not damaged by violent or explosive events during the destruction and meltdown of the reactor vessel and core.

9. Atmospheric discharge arrangements for the passive, self-operating discard of the heat from the two heat-transfer systems, without the discharge of any radioactive materials.

10. Provision is made for removal of the decay heat (heat generated as radioactive material decays) by passive means regardless of the presence or absence of water in the containment and of the degree of interaction of the core material therewith.

In accordance with another aspect of the invention there is provided a method for retrofitting nuclear reactor plants with a core-catcher system for preventing the escape of radioactive material to the biosphere, the method being characterised by the steps of: preparing two transversely extending tunnels, to two spaced points directly below the reactor core of the nuclear reactor plant; excavating a relatively small diameter hole extending vertically downward from the floor of the reactor plant immediately below the reactor plant, said hole having a diameter in the order of the diameter of said core, and said hole extending to a depth several times the diameter of said hole; constructing an isolation conduit means at the top of said hole immediately below the floor of said reactor and under the core thereof; mounting some shock-absorbing and delaying material in said isolation conduit means to slow the descent of molten core material; and constructing a core-catching heat exchanger in the hole below said isolation conduit means for receiving the molten core material after it traverses the isolation conduit means.

Brief description of the drawings

Figure 1 shows a conventional nuclear reactor equipped with a core catcher, and also shows schematically the manner by which the installation could be retrofitted to an existing nuclear reactor;

Figure 2 is a detailed view of an isolation conduit and the core-catcher heat exchanger; and

Figure 3 is a schematic showing of a core-catcher heat exchanger for a fast breeder type of reactor core.

Detailed description

Figure 1 shows a nuclear reactor including a containment structure 12 and a primary reactor vessel 14 containing the central core structure, arranged in a generally conventional configuration, with the surface of the earth being generally indicated by the line 16.

The new structure which has been retrofitted to the nuclear reactor includes an isolation tube 18, and a core-catcher heat exchanger structure 20. The floor of the containment structure 12 has been thinned down at 22, so that, in the unlikely event of a melt-down of the core 14, the floor 22 will be penetrated by the melted down fragments, and they will descend into the isolation tube 18 and eventually down into the core-catcher heat exchanger structure 20.

The isolation tube or conduit 18 includes transverse sheets, such as thin sheets of steel 24, and suitable layers of shock absorbing material which is relatively light in weight, such as sand, as shown by reference numerals 26, supported by the sheet material 24. Similar arrangements may be provided in the central area of the heat exchanger 20 to delay the descent of the molten core and related material, so that a slow controlled descent is achieved which will not destroy the heat exchanger walls by undue shock.

The isolation tube 18 is preferably provided with an inner steel liner 28 (see Figure 2), a layer of refractory material 30, such as carbon, and then an additional outer steel jacket 32. The entire assembly including the isolation tube 18 and the core-catcher heat exchanger 20 is enclosed in a reinforced concrete shell 34. As best shown in Figure 2, the core-catcher heat exchanger includes the inner walls 36 and the outer walls 38 which may be extensions of the walls 28 and 32 respectively, which enclose the isolation conduit.

Incidentally, it should be noted that the break 40 as schematically indicated between the isolation conduit 18 and the heat exchanger portion 20 of the structure is included to indicate that the action indicated by the circulation arrows 42, 44, and 46 would not occur with the support plates 24 and the sand 26 in the indicated position in Figure 2, but these structures are merely shown for purposes of greater detail than is possible in Figure 1. Of course, once the molten material has decended into the heat exchanger area 20, the sand and support plates 26 and 24 would have served their delaying function and would be reduced to molten form. In Figure 2, the lower circulating arrows 46 represent the cooling action of the heaviest material, uranium oxide, which would descend to the bottom of the heat exchanger structure. Lighter weight material, such as molten steel and the like would be located in the next higher zone as indicated by the circulating arrows 44, while still lighter weight material, such as the sand, or other flux which may be provided within the isolation conduit and the heat exchanger structure, would be floating on top where the arrows 42 are present.

The cooling jacket 48 between the inner wall 36 and the outer wall 38 is filled with water, and this automatically circulates through the lower input conduit 50 and the upper output conduit 52, which are connected as shown in Figure 1 to the cooling structure 54. Molten uranium oxide normally has a melting point in the order of 2100 or 2200 degrees centigrade, which is well above the melting point of approximately 1400 or 1500 degrees centigrade for the inner steel lining 36 which faces the molten uranium oxide. However, the high thermal conductivity of the steel wall relative to that of uranium oxide insures that the steel will not differ significantly in temperature from the adjacent cooling water. In practice, therefore, the uranium oxide immediately adjacent the steel walls of the heat exchanger will solidify and form a "frozen" or solid layer against the steel wall, and the uranium oxide may thus be thought to form its own container within which the cooling action progresses. Of course, the water within the jacket 48 is heated rapidly and circulates through the large conduits 50 and 52 to the water tower 54, where much of the waer may boil off, in the course of a month or two, as the molten core material and other miscellaneous molten debris cools down.

Instead of a cooling tower 54, water may be drawn from, or returned to, any large body of water, such as a nearby lake, river, or ocean. Of course, with the thick steel walls and the construction as described above, the water does not become radioactive, and accordingly, there is no concern with the boiling off of the water from the water tower 54.

Incidentally, the inner wall 36 of the heat exchanger 20 must be firmly supported by structural members, some of which are indicated schematically at 56, to support the very substantial weight of the molten core materials.

In Figure 1, the elevator or hoist structure 62, the vertical shaft 64, and the two horizontal shafts 66 and 68 have been shown to indicate one construction technique whereby the core-catcher arrangements could be retrofitted to an existing nuclear facility. Initially, the vertical shaft would be constructed in accordance with conventional mining techniques, with the two horizontal access tunnels 66 and 68 being dug to the indicated points directly under the core 14. With the relatively small diameter of the isolation tube and core-catching heat exchanger structure, most of the construction work can be accomplished while the reactor is still operating normally. This is particularly important, because the cost of shutdown may be in the order of several hundred thousand dollars per day. However, for a brief period of several days, while the reduced thickness floor 22, and the upper section of the isolation tube 18 are being constructed and positioned, the reactor must be briefly shut down. The input and output water conduits 50 and 52 may follow the access tunnels 66 and 68 during their substantially horizontal sections, and holes for the vertical sections of these conduits may be bored with conventional drilling equipment.

In the foregoing discussion, attention has been concentrated on the below-ground structure; however, in some cases, when a melt-down would occur, the core structure might hang up within the containment structure 12, with high levels of heat being generated within this structure 12. In order to accommodate this eventuality, the heat exchanger structure 72 is provided to absorb heat in its section 74 extending within the containment structure 12, and dissipates the absorbed heat in the portion 76 which is within the cooling water 78 inside the cooling tower 54. A substantial protective shield 80 may be provided to protect the heat exchanger structure 74, from the possibly violent events associated with the possible melt-down of the reactor 14. With both the heat exchanger 72 and the core-catcher heat exchanger 20 being coupled to the single water tower 54, it has the capacity to absorb the core-decay heat, whether most of the heat is generated within the structure 12, or if the core, as expected, decends down into the core catching heat exchanger 20.

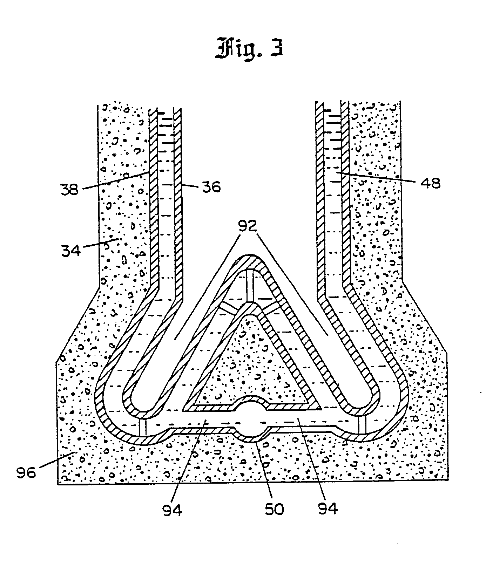

When conventional reactors utilizing slow neutrons and water to slow down the speed of the neutrons, are employed, no special precautions need be taken with regard to the core catcher heat exchanger geometry to prevent it from going "critical" and generating additional heat. However, in the case of fast breeder reactors, there could be some possibility if the mass of the material was sufficiently great, that such criticality could occur. Accordingly, for reactors of this type, a longer and thinner vertically extending heat exchanger could be used, or alternatively a diverging geometry of the type shown in Figure 3 could be employed.

In Figure 3, the structure, including the inner steel walls 36 and the outer steel walls 38, as well as the concrete enclosing strucure 34 would be substantially the same, with a cooling jacket 48, all substantially as shown in Figure 2. However, at the lowermost end of the heat exchanging structure, with sufficient volume to hold the heavy fast-breeder material, a series of branching arms 92 are provided. The input conduit 50 may be connected by suitable manifold piping 94 to the lower end of the water jacket enclosing each of the branching conduits 92. In addition, the concrete structure 34 is enlarged at its lower end 96 to fully enclose the lower end of the structure. It has been determined that, if the branching conduits 92 are oval, and if the distances across the conduits in the shorter cross-sectional direction are maintained less than about 30 centimeters (about one foot), there will be no danger of the fast-breeder reactor material going critical.

Incidentally, as noted above, the diameter of a nuclear reactor containment shell would normally be in excess of 30 meters (100 feet), probably in the order of 37,50 meters (125 feet). Further, the diameter of the isolation tube and the core-catcher, is preferably in the order of two or three meters, or about 10 feet. Translated into the terms of cross-sectional area, the base of a nuclear containment structure would normally be greater than 10,000 square feet of 1,000 square meters, while the cross-sectional area of the isolation tube and the core-catcher heat exchanger would normally be in the order of 100 square feet, or ten square meters. Translating these figures into percentages, the transverse dimension of the isolation tube and core-catcher structure will normally be less than 10 percent or less than 20 percent of the transverse dimension of the base of the containment structure; and the cross-sectional area of the isolation tube and the core-catcher structure will normally be less than 5 percent of the cross-sectional area of the base of the containment structure.

For completeness, the following additional patents are cited as being of interest, although they have the shortcomings as noted hereinabove: U.S. Patent No. 3,640,451, granted March 14, 1972; No. 3,702,802, granted November 14, 1972; No. 3,719,556, granted March 6, 1973; No. 3,964,966, granted June 22, 1976; No. 4,003,785, granted January 18, 1977; No. 4,028,179, granted June 7, 1977; No. 4,072,561, granted February 7, 1978; No. 4,073,682, granted February 14, 1978, and No. 4,113,560, granted September 12, 1978.

In closing, it is to be understood that the foregoing description and the drawings relate to specific embodiments of the invention. Other arrangements may be employed in the implementation of the invention without departing from the spirit and scope thereof. For example, instead of using steel for the lining of the isolation tube and the heat exchanger, other high temperature resistant, high strength materials could be employed. Similarly, instead of using sand and steel supporting sheets in the isolation tube and the heat exchanger, other inert material, such as plastic sheets and dirt, for example, or nearly any other material for slowing down the descent of the core, absorbing shock and avoiding steam explosions, could be employed. Further, other arrangements for conducting heat away from the core-catching reactor in a passive manner, could be employed instead of the water cooling arrangement. In addition, the cross sectional dimensions of the water jackets and the strength of the supporting elements between the walls of the water jackets would be proportioned to accommodate the maximum heat flow and maximum stresses required by these portions for the particular nuclear reactor under consideration. It is to be understood, therefore, that such alternatives and other similar ones are within the scope of the present invention.

**Claims**

1. A passive system for the prevention of the escape of radioactive material to the biosphere from a nuclear reactor plant suffering a major core-destructive accident with melt-down of the reactor core (14), said nuclear reactor plant having a main above-ground structural containment shell (12), said system comprising:

isolation conduit means (18) extending downward from the floor (22) of the nuclear reactor plant immediately below the reactor core (14) to receive the core material following melt down, said isolation conduit means (18) having a relatively narrow inner cross-sectional transverse area corresponding substantially to that of the reactor core (14) per se; and means (24, 26) associated with said isolation conduit means (18) for delaying the descent of said core material through said isolation conduit means following melt-down; characterised by said isolation conduit means (18) having a vertical extent at least equal to the transverse extent of said isolation conduit means; a core-catcher exchanger (20) mounted below said isolation conduit means (18) to receive melted core material flowing through said isolation conduit means (18), said heat exchanger (20) having a sufficiently small cross-section for containing the core material to preclude a "critical" assembly for the particular core material employed in the reactor and said core-catcher heat exchanger (20) being of a size and shape for sufficiently cooling the molten core material to provide a solid liner formed from said molten core material on the inner wall of said core-catcher heat exchanger; and passive means (50, 52, 54) for conducting heat away from said core-catcher heat exchanger (20).

2. A system as defined in claim 1 wherein said isolation conduit means (18) includes an outer reinforced concrete shell (34), refractory lining material (30) within the concrete shell and an inner layer (28) of a high strength, high temperature resistant, metal.

3. A system as defined in claim 1 or 2 and comprising a relatively thin sealing layer extending transversely immediately below the reactor core (14) and over the upper end of said isolation conduit means (18) and said delaying means (24, 26) being mounted within said isolation tube.

4. A system as defined in claim 1, 2 or 3, wherein said heat exchanger (20) includes an inner structural liner (36) of good heat transfer material and an enclosing water jacket (38) having upper and lower conduit means (52, 50);

said system further comprising a passive water cooling container or tower (54) mounted adjacent the main nuclear reactor plant, said water cooling tower being open to the atmosphere to permit the boiling off of water; and

means for coupling said upper and lower conduit means (52, 50) to said water cooling container or tower (54), to facilitate the flow of heat between said core-catcher heat exchanger and said water cooling container or tower.

5. A system as defined in claim 4 and comprising additional passive heat exchanger means (72) coupled between the space within said reactor plant containment shell and said water cooling container or tower.

6. A system as defined in claim 4 or 5 wherein there are supporting means (56) in the space between the liner (36) and the jacket (38) to support the liner and jacket in spaced relation.

7. A system as defined in any one of the preceding claims, wherein the isolation conduit means (18) has an inner cross-sectional area which is of the same order of magnitude as said core and a depth at least twice its greatest cross-sectional dimension.

8. A system as defined in any one of the preceding claims, wherein the internal transverse cross-sectional area of said isolation conduit means is less than five percent of the area of the base of said containment shell.

9. A system as defined in claim 8, wherein the internal transverse cross-sectional area of said isolation conduit means is less than three percent of the area of the base of said containment shell.

10. A system as defined in any one of the preceding claims, wherein said isolation conduit means is substantially circular with an inner diameter in the order of two meters.

11. A system as defined in any one of the preceding claims, wherein said reactor is a fast breeder reactor, and wherein said core-catcher heat exchanger has at least one transverse dimension at its lower end in the order of 30 centimeters or less.

12. A system as defined in any one of the preceding claims, wherein said core-catcher heat exchanger includes branching structure means (92) at its lower end to separate the reactor core material and avoid "criticality".

13. A system as defined in any one of the preceding claims, wherein the isolation conduit means (18) and the core-catcher heat exchanger (20) are formed of a single substantially vertically extending channel.

14. A system as defined in any one of the preceding claims, wherein the core-catcher heat exchanger (20) has means for delaying the descent of molten core material through the core-catcher heat exchanger.

15. A system as defined in any one of the preceding claims, wherein an outer reinforced concrete shell (34) extends the length of the core-catcher heat exchanger.

16. A method for retrofitting nuclear reactor plants with a core-catcher system for preventing the escape of radioactive material to the biosphere, the method being characterised by the steps of:

preparing two transversely extending tunnels (66, 68) to two spaced points directly below the reactor core (14) of the nuclear reactor plant;

excavating a relatively small diameter hole extending vertically downward from the floor of the reactor plant immediately below the reactor plant, said hole having a diameter in the order of the diameter of said core, and said hole extending to a depth several times the diameter of said hole;

constructing an isolation conduit means (18) at the top of said hole immediately below the floor (22) of said reactor and under the core (14) thereof;

mounting some shock-absorbing and delaying material (24, 26) in said isolation conduit means (18) to slow the descent of molten core material; and

constructing a core-catching heat exchanger (20) in the hole below said isolation conduit means (18) for receiving the molten core material after it traverses the isolation conduit means (18).

17. A method as defined in claim 16, including the steps of constructing a water jacketed heat exchanger (20) in said hole, with inlet and outlet connections (50, 52) at the bottom and top regions of the heat exchanger, erecting a water container or tower (54) adjacent the containment shell of said plant, and coupling said inlet and outlet connections to said water container or tower.

18. A method as defined in claim 17 and further comprising the step of providing a further heat exchanger (72) extending between the space within said containment shell (12) and said water container or tower (54) whereby heat may be dissipated either from said core-catcher heat exchanger (20) or from said containment structure, or both.

19. A method as defined in claim 17 or 18 and including the step of installing conduit means for supplying water to and from said inlet and outlet connections (50, 52) through at least a portion of said generally horizontally extending tunnels (66, 68).

20. A method as defined in anyone of claims 16 to 19 and including the additional step of preparing a vertically extending shaft (64) prior to constructing said transversely extending tunnels, and erecting a hoist or elevator (62) to facilitate the movement of equipment and manpower from the earth's surface to implement the method step.

**Patentansprüche**

1. Passives System zum Verhindern des Entweichens von radioaktivem Material aus einer Kernreaktoranlage in die Biosphäre, wenn in der Kernreaktoranlage ein großer, den Kern zerstörender Unfall mit Niederschmelzen des Reaktorkerns (14) auftritt, wobei die Kernreaktoranlage eine überirdische Haupt-Sicherheitshüllenkonstruktion (12) besitzt,

und wobei das System folgende Teile aufweist:

isolierende Leitungsmittel (18), die sich vom Boden (22) des Kernreaktoranlage unmittelbar unter dem Reaktorkern (14) nach unten erstrekken, um das Kernmaterial nach dem Niederschmelzen aufzunehmen, wobei diese isolierenden Leitungsmittel (18) eine relativ kleine innere Querschnittsfläche besitzen, die im wesentlichen derjenigen des eigentlichen Reaktorkerns (14) entspricht,

sowie den isolierenden Leitungsmitteln (18) zugeordnete Mittel (24, 26), die das Absinken des Kernmaterials durch die isolierenden Leitungsmittel (18) nach dem Niederschmelzen verzögern,

dadurch gekennzeichnet,

daß die isolierenden Leitungsmittel (18) eine vertikale Ausdehnung haben, die zumindest so groß ist wie ihre Erstreckung in transversaler Richtung,

daß unter den isolierenden Leitungsmitteln (18) ein Kernfänger-Wärmetauscher (20) auf Aufnahme von geschmolzenem Kernmaterial montiert ist, das durch die Leitungsmittel (18) fließt,

daß dieser Wärmetauscher (20) einen Querschnitt hat, der hinreichend klein ist, um das Kernmaterial festzuhalten und eine "kritische" Anhäufung für das in dem Reaktor verwendete spezielle Kernmaterial auszuschließen,

daß der Kernfänger-Wärmetauscher (20) eine solche Größe und Form hat, daß das geschmolzene Kernmaterial genügend gekühlt wird, um eine feste, aus dem geschmolzenen Kernmaterial gebildete Auskleidung auf der Innenwandung des Kernfänger-Wärmetauschers (20) zu bewirken,

und daß passive Mittel (50, 52, 54) zur Wärmeabführung von dem Kernfänger-Wärmetauscher (20) vorgesehen sind.

2. System nach Anspruch 1, bei dem die Leitungsmittel (18) eine verstärkte Betonsicherheitshülle (34), ferner in dieser Sicherheitshülle hitzebeständiges Auskleidungsmaterial (30) sowie eine innere Schicht (28) aus Material mit hoher Festigkeit und hoher Temperaturbeständigkeit aufweist.

3. System nach Anspruch 1 oder 2 mit einer relativ dünnen Dichtungsschicht, die sich in transversaler Richtung unmittelbar unter dem Reaktorkern (14) und über dem oberen Ende der Leitungsmittel (18) und den in dem Isolierrohr montierten Verzögerungsmitteln (24, 26) erstreckt.

4. System nach Anspruch 1, 2 oder 3, bei dem der Wärmetauscher (20) eine strukturelle Innenauskleidung (36) aus gut wärmeleitfähigem Material und eine diese umgebende Wasserhülle (38) mit oberen und unteren Leitungsmitteln (52, 50) besitzt,

wobei das System ferner eine passiven Wasserkühlbehälter oder -turm (54) aufweist, der in der Nähe der Haupt-Kernreaktoranlage angeordnet ist und nach oben zur Atmosphäre offen ist, um das Verkochen von Wasser zu ermöglichen,

sowie Mittel zur Verbindung der oberen und unteren Leitungsmittel (52, 50) mit dem Wasserkühlbehälter oder -turm (54) zur Begünstigung der Wärmeströmung zwischen dem Kernfänger-Wärmetauscher und dem Wasserkühlbehälter oder -turm.

5. System nach Anspruch 4, bei dem zusätzliche passive Wärmetauschermittel (72) vorgesehen sind, die zwischen dem Innenraum der Sicherheithülle der Rektoranlage und dem Wasserkühlbehälter oder -turm angeordnet sind.

6. System nach Anspruch 4 oder 5, bei dem in dem Zwischenraum zwischen der Auskleidung (56) und der Wasserhülle (38) Halterungsmittel (56) vorgesehen sind, die dazu dienen, die Auskleidung und die Wasserhülle in gegenseitigem Abstand zu halten.

7. System nach einem der vorhergehenden Ansprüche, bei dem die isolierenden Leitungsmittel (18) eine innere Querschnittsfläche haben, die in derselben Größenordnung liegt wie diejenige des Kerns und eine Tiefe, die wenigstens zwei mal so groß ist wie die größte Querschnittsausdehnung.

8. System nach einem der vorhergehenden Ansprüche, bei dem die innere Querschnittsfläche der isolierenden Leitungsmittel (18) weniger als 5% der Basisfläche der Sicherheitshülle beträgt.

9. System nach Anspruch 8, bei dem die innere Querschnittsfläche der isolierenden Leitungsmittel weniger als 3% der Basisfläche der Sicherheitshülle beträgt.

10. System nach einem der vorhergehenden Ansprüche, bei dem die isolierenden Leitungsmittel im wesentlichen kreisförmig ausgebildet sind und einen Innendurchmesser in der Größenordnung von 2 Metern haben.

11. System nach einem der vorhergehenden Ansprüche, bei dem der Reaktor ein schneller Brüter ist und der Kernfänger-Wärmetauscher an seinem unteren Ende wenigstens eine Querausdehnung in der Größenordnung von 30 Zentimeter oder weniger hat.

12. System nach einem der vorhergehenden Ansprüche, bei dem der Kernfänger-Wärmetauscher in seinem unteren Endbereich Verzweigungsstrukturmittel (92) zum Trennen und zur Vermeidung einer kritischen Anhäufung des Reaktor-Kernmaterials besitzt.

13. System nach einem der vorhergehenden Ansprüche, bei dem die isolierenden Leitungsmittel (18) und der Kernfänger-Wärmetauscher (20) von einem einzigen im wesentlichen vertikal verlaufenden Kanal gebildet sind.

14. System nach einem der vorhergehenden Ansprüche, bei dem der Kernfänger-Wärmetauscher (20) Mittel zur Verzögerung des Abstiegs von geschmolzenem Kernmaterial durch den Kernfänger-Wärmetauscher aufweist.

15. System nach einem der vorhergehenden Ansprüche, bei dem sich eine armierte Betonaußenschale (34) über die Länge des Kernfänger-Wärmetauschers erstreckt.

16. Verfahren zum Nachrüsten von Kernreaktoranlagen mit einem Kernfänger-System zum Schutz gegen das Entweichen von radioaktivem Material in die Biosphäre, gekennzeichnet durch die Verfahrensschritte,

daß zwei querverlaufende Tunnel (66, 68) zu zwei im Abstand angeordneten Punkten direkt unter dem Reaktorkern (14) der Kernreaktoranlage hergestellt werden,

daß ein Loch mit relativ kleinem Durchmesser gegraben wird, das von dem Boden der Kernreaktoranlage unmittelbar unter dieser vertikal nach unten verläuft und einen Durchmesser in der Größenordnung des Durchmessers des Kerns hat und sich in eine Tiefe erstreckt, die einem Mehrfachen seines Durchmessers entspricht,

daß im oberen Teil des Lochs unmittelbar unter dem Boden (22) des Reaktors und unter dessen Kern (14) isolierende Leitungsmittel (18) gebaut werden,

daß in den isolierenden Leitungsmitteln (18) stoßdämpfendes und verzögerndes Material (24, 26) zur Verlangsamung des Abstiegs von geschmolzenem Kernmaterial angeordnet wird,

und daß in dem Loch unter den isolierenden Leitungsmitteln (18) ein Kernfänger-Wärmetauscher (20) errichtet wird, der dazu dient, das geschmolzene Kernmaterial aufzunehmen, nachdem es die isolierenden Leitungsmittel (18) durchdrungen hat.

17. Verfahren nach Anspruch 16 mit den weiteren Verfahrensschritten,

daß in dem Loch ein waserummantelter Wärmetauscher (20) mit Einlaß- und Auslaßverbindungen (50, 52) im unteren und oberen Bereich des Wärmetauschers errichtet wird,

daß in der Nähe der Behälterschalter der Anlage ein Wasserkühlbehälter oder -turm (54) errichtet wird,

und daß die Einlaß- und Auslaßverbindungen mit diesem Wasserkühlbehälter oder -turm verbunden werden.

18. Verfahren nach Anspruch 17 mit den weiteren Verfahrensschritten,

daß ein weiterer Wärmetauscher (72) vorgesehen wird, der zwischen dem Innenraum der Sicherheitshülle (12) und dem Wasserkühlbehälter oder -turm (54) verläuft, so daß Wärme von dem Kernfänger-Wärmetauscher (20) oder von der Behälter-Konstruktion oder von beiden abgeleitet werden kann.

19. Verfahren nach Anspruch 17 oder 18 mit dem Verfahrensschritt, daß Leitungsmittel zur Zuführung und Abführung von Wasser zu der Einlaßverbindung (50) bzw. von der Auslaßverbindung (52) durch wenigstens einen Teil der im wesentlichen horizontal verlaufenden Tunnel (66, 68) installiert werden.

20. Verfahren nach einem der Ansprüche 16 bis 19 mit den zusätzlichen Verfahrensschritten,

daß vor dem Bau der transversal verlaufenden Tunnel ein vertikaler Schacht (64) hergestellt wird,

und daß eine Winde oder ein Aufzug (62) errichtet wird, um die Beförderung der zur Durchführung der Verfahrensschritte erforderlichen Ausrüstung und Arbeitskräfte zu erleichtern.

**Revendications**

1. Un système passif pour la prévention de la fuite de matière radioactive vers la biosphère à partir d'une centrale à réacteur nucléaire souffrant d'un accident majeur de destruction du coeur avec fusion du coeur du réacteur (14), ladite centrale à réacteur nucléaire comportant une enceinte principale de confinement (12), se trouvant au-dessous du sol ledit système comprenant:

un moyen de conduit d'isolation (18) s'étendant vers le bas à partir du plancher (22) de la centrale à réacteur nucléaire immédiatement en-dessous du coeur du réacteur (14) afin de recevoir la matière de coeur après fusion, ledit moyen de conduit d'isolation (18) ayant une surface transversale de coupe interne relativement étroite correspondant pratiquement à celle du coeur du réacteur (14) en soi; et un moyen (24, 26) associé audit moyen de conduit d'isolation (18) pour retarder la descente de ladite matière de coeur à travers ledit moyen de conduit d'isolation après fusion; caractérisé en ce que ledit moyen de conduit d'isolation (18) comporte un prolongement vertical au moins égal au prolongement transversal dudit moyen de conduit d'isolation; un échangeur de chaleur à cendrier (20) monté en-dessous dudit moyen de conduit d'isolation (18) afin de recevoir la matière de coeur fondue s'écoulant à travers ledit moyen de conduit d'isolation (18), ledit échangeur de chaleur (20) présentant une section transversale suffisamment petite pour contenir la matière de coeur afin d'empêcher un assemblage "critique" pour le matériau de coeur particulière employée dans le réacteur et ledit échangeur de chaleur à cendrier (20) étant de dimension et de forme permettant de refroidir suffisamment la matière de coeur fondu afin de créer un revêtement solide formé à partir de ladite matière de coeur fondue sur la paroi interne dudit échangeur de chaleur à cendrier; et un moyen passif (50, 52, 54) servant à conduire la chaleur hors dudit échangeur de chaleur à cendrier (20).

2. Un système tel que défini à la revendication 1, dans lequel ledit moyen de conduit d'isolation (18) comprend une enceinte externe en béton armé (34), une matière de revêtement réfractaire (30) à l'intérieur de l'enceinte en béton et une couche intérieure (28) d'un métal à résistance mécanique élevée et à résistance élevée à la température.

3. Un système tel que défini à la revendication 1 ou 2, et comprenant une couche d'étanchéité relativement mince s'étendant transversalement immédiatement en dessous du coeur de réacteur (14) et au-dessus de l'extrémité supérieure dudit moyen de conduit d'isolation (18), ledit moyen de retard (24, 26) étant monté à l'intérieur dudit tube d'isolation.

4. Un système tel que défini à la revendication 1, 2 ou 3, dans lequel ledit échangeur de chaleur (20) comprend un revêtement interne structurel (36) constitué d'une matière à bon transfert de chaleur et renfermant un gainage d'eau (38) comprenant un moyen de conduit supérieur et inférieur (52, 50);

ledit système comprenant en outre un château ou tour (54) de refroidissement d'eau passif monté de manière adjacente à la centrale principale à réacteur nucléaire, ladite tour de refroidissement d'eau étant ouverte à l'air afin de permettre l'évaporation par ébullition de l'eau, et

un moyen servant à coupler ledit moyen de conduits supérieur et inférieur (52, 50) audit château ou tour (54) de refroidissement d'eau, afin de faciliter la circulation de chaleur entre lesdits échangeurs de chaleur à cendrier et ledit château ou tour de refroidissement d'eau.

5. Un système tel que défini à la revendication 4 et comprenant un moyen d'échange de chaleur passif (72) supplémentaire couplé entre l'espace situé entre ladite enceinte de confinement de la centrale à réacteur et ledit château ou tour de refroidissement d'eau.

6. un système tel que défini à la revendication 4 ou 5, dans lequel sont prévus des moyens de support (56) dans l'espace situés entre le revêtement (36) et le gainage (38) afin de soutenir le revêtement et le gainage dans un rapport espacé.

7. Un système tel que défini à l'une quelconque des revendications précédentes, dans lequel le moyen de conduit d'isolation (18) présente une surface transversale interne qui est du même ordre de grandeur que ledit coeur et une profondeur d'au moins deux fois sa plus grande dimension transversale.

8. Un système tel que défini à l'une quelconque des revendications précédentes, dans lequel la surface de coupe transversale interne dudit moyen de conduit d'isolation est inférieure à cinq pourcent de la surface de la base de ladite enceinte de confinement.

9. Système tel que défini à la revendication 8, dans lequel la surface en coupe transversale interne dudit moyen de conduit d'isolation est inférieure à trois pourcent de la surface de la base de ladite enceinte de confinement.

10. Un système tel que défini à l'une quelconque des revendications précédentes, dans lequel ledit moyen de conduit d'isolation est pratiquement circulaire avec un diamètre interne de l'ordre de deux mètres.

11. Un système tel que défini à l'une quelconque des revendications précédentes, dans lequel ledit réacteur est un surrégénérateur rapide, et dans lequel ledit échangeur de chaleur à cendrier présente au moins une dimension transversale à son extrémité inférieure de l'ordre de 30 centimètres ou moins.

12. Un système tel que défini à l'une quelconque des revendications précédentes, dans lequel ledit échangeur de chaleur à cendrier comprend un moyen de structure d'embranchement (92) à son extrémité inférieure afin de séparer la matière du coeur du réacteur et éviter la "criticité".

13. Un système tel que défini à l'une quelconque des revendications précédentes, dans lequel le moyen de conduit d'isolation (18) et l'échangeur de chaleur à cendrier (20) sont constitués d'un seul canal s'étendant sensiblement dans le sens vertical.

14. Un système tel que défini à l'une quelconque des revendications précédentes, dans lequel l'échangeur de chaleur à cendrier (20) comporte un moyen servant à retarder la descente de la matière de coeur fondue à travers l'échangeur de chaleur à cendrier.

15. Un système tel que défini à l'une quelconque des revendications précédentes, dans lequel une enceinte extérieure de béton armé (34) prolonge la longueur de l'échangeur de chaleur à cendrier.

16. Un procédé servant à améliorer la centrale à réacteur nucléaire au moyen d'un système à cendrier pour empêcher la fuite de matières radioactives vers la biosphère, le procédé étant caractérisé par les étapes consistant en:

mettre en place deux tunnels (66, 68) s'étendant transversalement jusqu'à deux points espacés directement en-dessous du coeur du réacteur (14) de la centrale à réacteur nucléaire;

creuser un trou d'un diamètre relativement faible s'étendant verticalement vers le bas à partir du plancher de la centrale à réacteur immédiatement en-dessous de la centrale réacteur, ledit trou ayant un diamètre de l'ordre du diamètre dudit coeur, et ledit trou s'étendant jusqu'à une profondeur de plusieurs fois le diamètre dudit trou;

construire un moyen de conduit d'isolation (18) au sommet dudit trou immédiatement en-dessous du plancher (22) dudit réacteur et en-dessous du coeur (14) de celui-ci;

placer une quelconque matière de retard et d'absorption et des chocs (24, 26) dans ledit moyen de conduit d'isolation (18) afin de ralentir la descente de la matière de coeur fondue; et

construire un échangeur de chaleur à cendrier (20) dans le trou en-dessous du moyen de conduit d'isolation (18) pour recevoir la matière de coeur fondue après passage dans le moyen de conduit d'isolation (18).

17. Un procédé tel que défini à la revendication 16, comprenant les étapes consistant à construire un échangeur de chaleur à gaines d'eau (20), dans ledit trou, avec des connexions d'entrée et de sortie (50, 52) au niveau des zones supérieure et inférieure de l'échangeur de chaleur, à ériger un château ou une tour d'eau (54) de manière adjacente à l'enceinte de confinement de ladite centrale, et à coupler lesdites connexions d'entrée et de sortie audit château ou tour d'eau.

18. Un procédé tel que défini à la revendication 17 et comprenant en outre l'étape consistant à créer un autre échangeur de chaleur (72) s'étendant entre l'espace situé à l'intérieur de ladite enceinte de confinement (12) et ledit château ou ladite tour d'eau (54) de sorte que la chaleur peut être dissipée soit à partir dudit échangeur de chaleur à cendrier (20) soit de ladite structure de confinement, ou des deux.

19. Un procédé tel que défini à la revendication 17 ou 18, et comprenant l'étape consistant à installer un moyen de conduit pour fournir de l'eau vers et en provenance desdites connexions d'entrée et de sortie (50, 52) à travers au moins une portion desdits tunnels s'étendant généralement dans le sens horizontal.

20. Un procédé tel que défini à l'une quelconque des revendications 16 à 19, et comprenant l'étape supplémentaire consistant à préparer un arbre (64) s'étendant verticalement avant de construire lesdits tunnels s'étendant transversalement, et à ériger un monte-charge ou un ascenseur (62) destiné à faciliter le déplacement du matériel et de l'équipe de travail depuis la surface de la terre pour la mise en place de l'étape du procédé.

Fig. 1

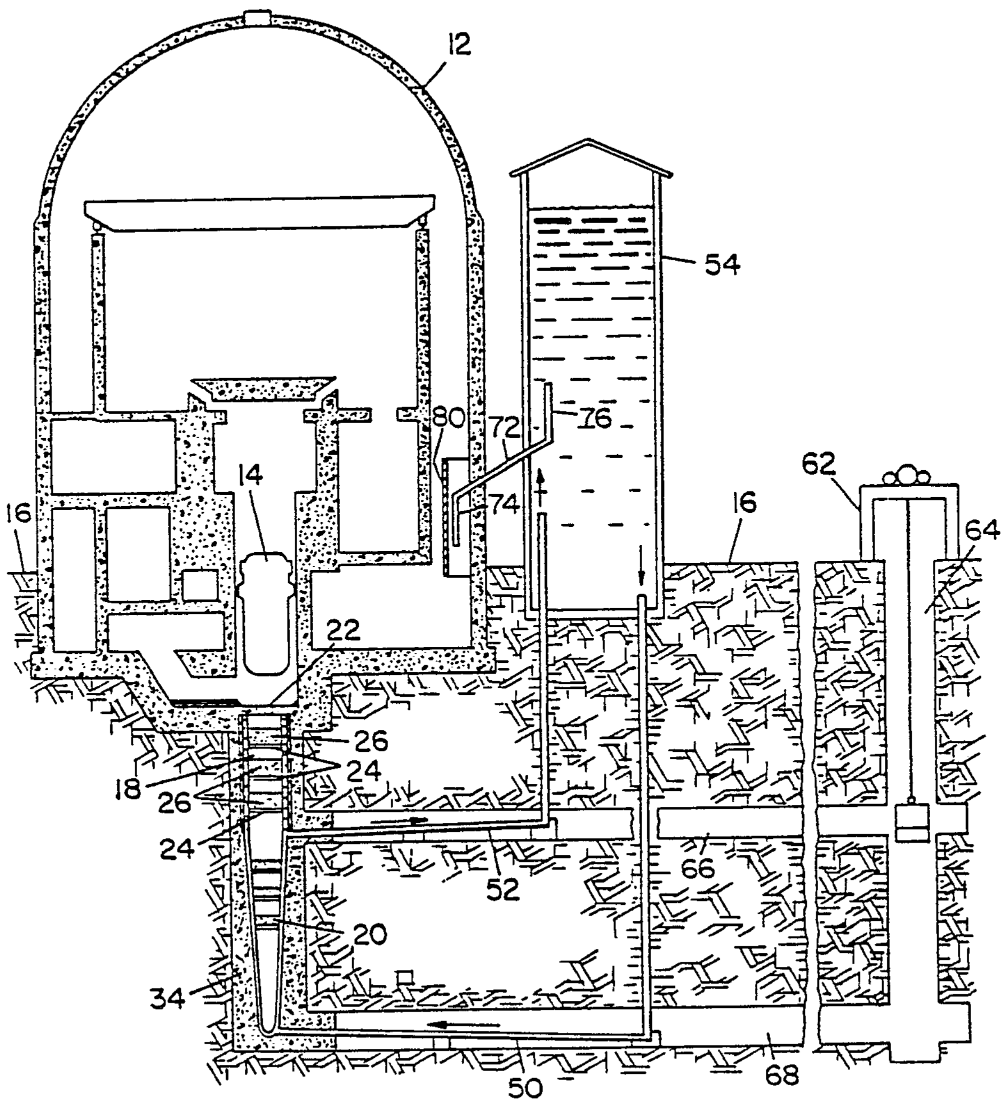

Fig. 2

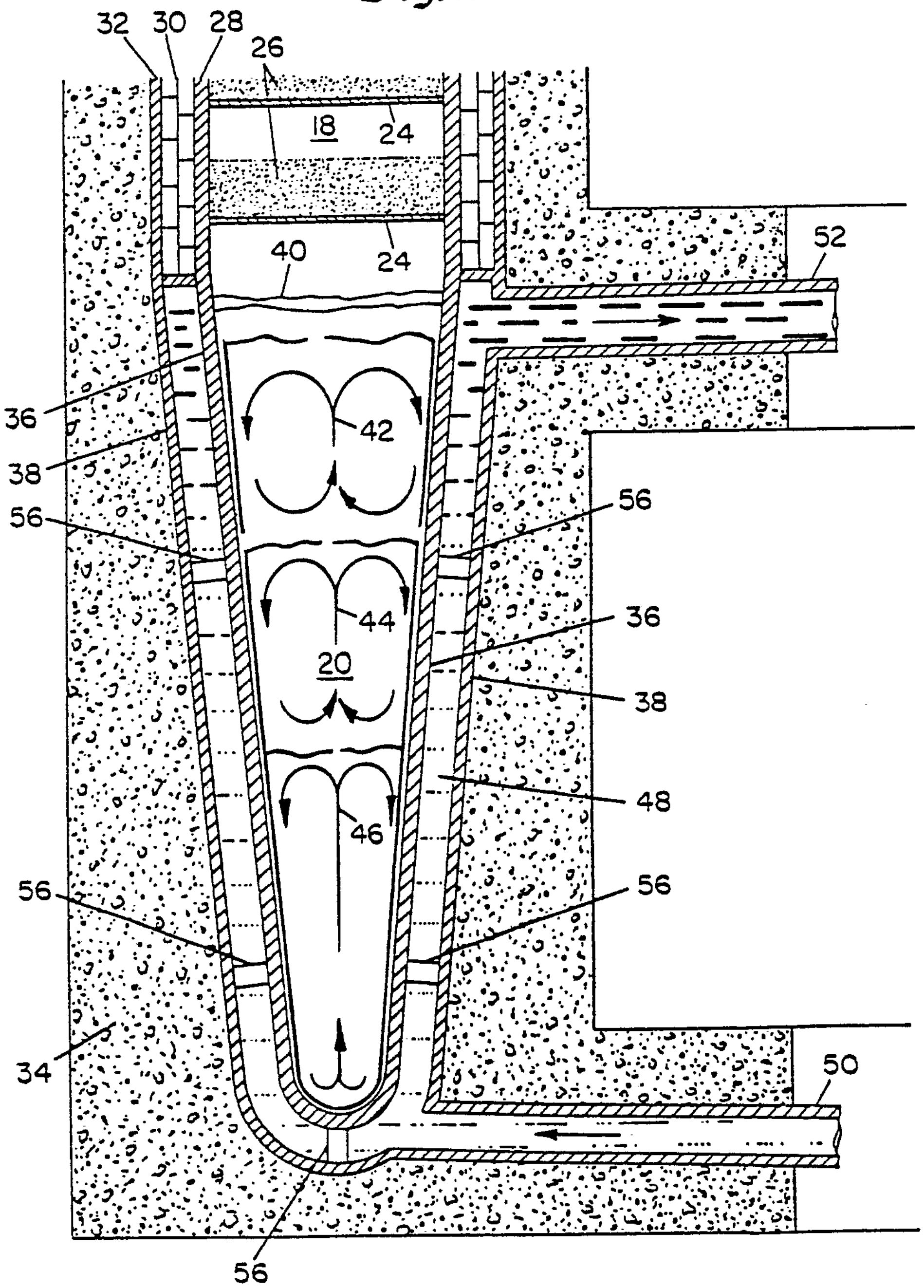
32
30
28
26
18
24
24
40
52
36
42
38
56
56
44
36
20
38
48
46
56
56
34
50
56

Fig. 3